# EUROPEAN PATENT APPLICATION

(11) **EP 0 635 802 A1**
(43) Date of publication of application: **25.01.1995**
(21) Application number: 94201613.0
(22) Date of filing: 07.06.1994
(51) Int. Cl.: G06T 5/00

(54) **A method of processing a digital detail signal**

(30) Priority: 09.06.1993 GB 9311943
(71) Applicant: KODAK LIMITED, Harrow, Middlesex HA1 4TY (GB); EASTMAN KODAK COMPANY, Rochester, New York 14650-2201 (US)
(72) Inventor: Sharman, Richard Arthur, c/o Kodak Limited, Harrow, Middlesex, HA1 4TY (GB)
(74) Representative: Phillips, Margaret Dawn

(57) **Abstract**

In known image processing systems, image data is filtered by a low pass filter to remove noise and grain from the image. A high pass filter is also used to produce detail signals. The high pass data is often cored before being added back to the low pass data to restore image sharpness but producing an overall reduction in noise and grain in the uniform areas of the image. Described herein is a method of processing image data which utilizes a look-up table containing a composite of an operator set coring level and a stored gain characteristic. This composite look-up table provides a wide range of composite characteristics which only requires a small number of stored gain characteristics.

## Description

### Field of the Invention

This invention relates to a method of processing a digital detail signal, and is more particularly concerned with image processing systems which utilise digital coring techniques.

### Background of the Invention

When images are electronically processed, one of the requirements is often to reduce the visibility of noise or grain. This is commonly carried out by first low pass filtering the image to remove much of the noise and grain, and then restoring the sharpness of the final image by adding on to the low pass image a processed detail signal.

One of the common processes for obtaining the processed detail signals is coring which removes small variations in the detail data due primarily to noise or grain.

One current method for digital coring comprises the use of a comparator and switch. The comparator compares the level of the incoming digital data with a preset coring level. The output of the comparator then switches the digital output to a zero level, when the incoming data is below the coring level, or to the signal, or some ratio of it, when the incoming data is above the coring level.

US-A-4 941 190 describes the use of two look-up tables to hold respective values corresponding to the gain part and the threshold or coring part of the detail transfer characteristic. The choice as to which look-up table to use is made by an adaptive coring system. In this system, for a given pixel, an annulus of points around that pixel is sampled and provides a background value. The pixel value is then compared with this background value to form a modified value for that pixel. The appropriate look-up table is then selected and its output is compared with the modified value of the pixel being considered. The result of this comparison is then passed on for further image processing.

US-A-4 825 297 describes contrast enhancement of edges by splitting the image data into a low pass channel and a high pass channel. Composite characteristics are stored in multiple slope look-up tables. These look-up tables are used to process the high pass channel and the characteristic selected is dependent on the value in the low pass channel.

US-A-4 962 419 discloses a signal processing network for colour correction and gamma compensation. The network includes a detail extraction circuit for generating a detail signal, the components of which are cored prior to being input to a detail enhancement circuit to generate an enhanced detail signal. A read-only memory (ROM) is used to hold a composite look-up table which enables the detail signal to be determined.

US-A-4 941 191 discloses an image processing system in which digitised discrete signals are processed in a look-up table according to the sum of the current digitised value for a discrete signal multiplied by a factor and the digitised value for the signal from the look-up table for a preceding discrete signal. The look-up table in this case is loaded by a computer with pre-defined data.

### Problem to be solved by the Invention

In known systems for digital coring, a series of comparators and switches are used, and a high speed data path carrying the digital data needs to pass through all these components.

It is an object of the present invention to provide a method of processing digital detail signal using coring techniques in which lower operating speeds can be tolerated.

### Summary of the Invention

In accordance with one aspect of the present invention, there is provided a method of processing a digital detail signal using a look-up table characterized in that the look-up table is a composite comprising a stored gain characteristic and an operator set coring level.

In accordance with a second aspect of the present invention, there is provided a method of loading a look-up table for use in the processing of a digital detail signal, the method comprising the steps of:
receiving an input signal corresponding to a coring level;
loading coring values in accordance with the coring level; and
loading selected gain characteristics.

### Advantageous Effect of the Invention

By this method, a wide range of composite characteristics can be provided by only needing to store a small number of gain characteristics.

Furthermore, the look-up table utilised in the method of the present invention can be loaded at low speed.

### Brief Description of the Drawings

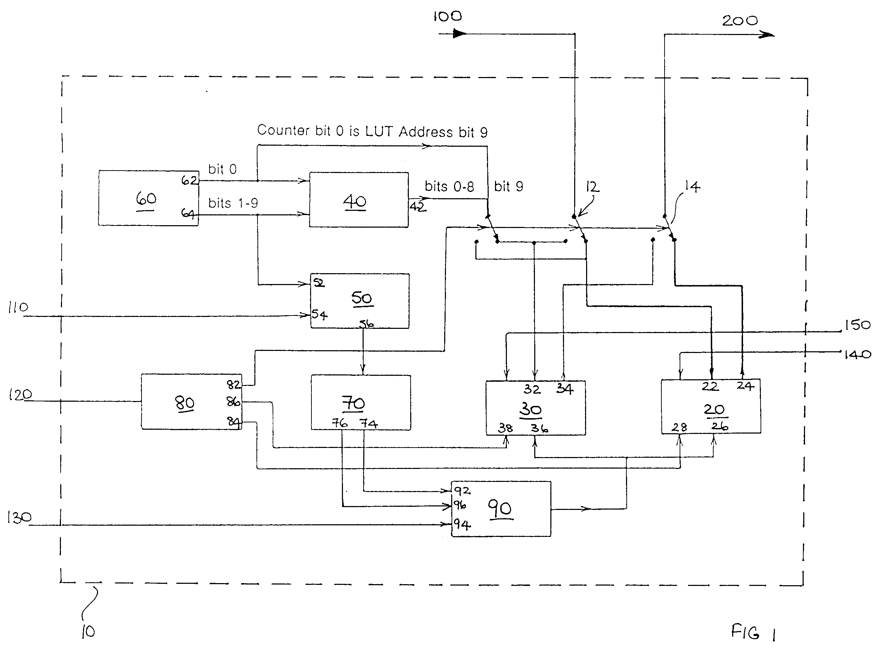

For a better understanding of the present invention, reference will now be made, by way of example only, to the accompanying drawing, the single Figure of which is a schematic block diagram of a circuit which can be used to carry out the method of the present invention.

### Detailed Description of the Invention

In an high definition television (HDTV) telecine, some of the image processing involves the use of high pass filtered data as detail signals for image enhancement. In order to provide the required level of enhancement, while minimising the degradation of the image due to grain and noise in the system, the detail signals are often cored.

The level of coring in a telecine depends to some extent on the level of system noise but is dominated by the grain level of the film being scanned. Modern low to medium speed films exhibit very low levels of grain but high speed and older films may have very substantial levels of grain particularly films in 16mm format. In order to deal with these high grain levels the optimum coring/gain characteristic may be complex with a wide range of coring levels.

Referring to the Figure, the system 10 for carrying out the method of the present invention is shown. The system comprises two look-up tables (LUT) 20, 30, a switchable inverter 40, a comparator 50, a first counter 60, a second counter 70, a logic unit 80 and a memory unit 90.

The system 10 is connected to a digital input line 100 and to an output line 200. Other input connections to the system 10 are an operator set core level 110, a control signal 120, gain characteristic 130, and connections 140, 150 to a selector (not shown).

A digital input signal is received along line 100 for processing and is connected to either LUT 10 or LUT 20 depending in accordance with the control signal 120 input to logic unit 80. Logic unit 80 provides a switching signal along line 82 to operate respective switches 12, 14 which connect the system 10 with input line 100 and output line 200 respectively. Logic unit 80 also supplies 'write' signals to LUT 20, 28 and LUT 30, 38 along respective lines 84, 86, and controls the sequence of events and writing to the LUTs 20, 30.

As shown in the Figure, the input line 100 is connected to address input 22 of LUT 20 so that digital data is passed through to LUT 20 for processing. The processed data is then output from LUT 20 at output 24 and on to output line 200 via switch 14.

Whilst LUT 20 is processing a signal, LUT 30 can be loaded with a composite gain/coring characteristic to be applied to the next digital signal to be processed. Address input 32 of LUT 30 is connected to output 42 of switchable inverter 40, apart from the Most Significant Bit (MSB) of the LUT 30 address which is connected directly to the Least Significant Bit (LSB) output 62 of counter 60. The LSB from counter 60 also switches the switchable inverter 40 between normal and invert states such that when the LSB of counter 60 is high, the inverter 40 is inverting and when LSB of counter 60 is low, the inverter 40 passes the addresses through unaltered. For example, when counter 60 has an output of '0', then the address data to LUT 30 is also '0', but when the counter 60 has an output of '1', the LSB is now high and the remaining addresses are now switched high and the address to LUT 30 is set to its maximum, that is, '1023' in a 10-bit system.

In a system where the 10-bit binary data represents a signed binary number, then the least significant nine bits are the value of that number and the tenth bit, or MSB, represents the sign of that number. When the MSB is low, the lowest positive number is '0' when all the remaining nine bits are low. When the remaining nine bits are high, this represents the largest positive number, '511'. When the MSB is high, the lowest negative number is '-1' and is represented by all the remaining nine bits being high. Similarly, the highest negative number is '-512' and is represented by all the remaining nine bits being low.

The LSB from counter 60 is used as the sign or MSB to the address 32 of LUT 30. This alternates switching the address input to LUT 30 between positive and negative numbers. In this way, data for small value positive and negative numbers is alternately loaded first, finishing up with the large positive and negative numbers. By adopting this order of loading the LUTs 20, 30, the coring data for the small positive and negative addresses can be loaded before the gain characteristics from memory unit 90.

Output 64 from counter 60 is also fed to input 52 of comparator 50. Core level signal 110 which is set by an operator is fed to input 54 of comparator 50. When output 64 from counter 60 exceeds the coring value 110, an output 56 from comparator 50 is passed to input 72 of counter 70. Output 74 of this counter 70 is passed to the address input 92 of the memory unit 90. The gain characteristic stored in memory unit 90 is loaded into the data input 36 of LUT 30. When the memory unit 90 has an address which is '0', as is the case until counter 60 reaches the coring value 110, then the data out of the memory unit 90 is also '0'.

The LSB from counter 70, output 76, is connected to the tenth bit of address 96 of memory unit 90 with the remaining addresses connected to the least significant nine bits of address 92. In this way, the positive half of the LUT characteristic in the memory unit 90 is from address '0' to '511' and the negative half of the characteristic is from address '512' to '1023'.

Other orders of gain data and memory unit addresses can be used depending on the rest of the system 10.

Once LUT 30 is loaded with the coring/gain characteristic, it can then be used to process an input signal on line 100 once logic unit 80 has operated to change the position of switches 12, 14, 16. In this position, the required characteristic for the next signal to be processed can be loaded into LUT 20 in an identical fashion to that described above for LUT 30.

With large capacity memories, the more significant address locations could be used to hold other gain characteristics in the memory unit 90 or other coring and gain characteristics in the LUTs 20, 30. In this way, all the tables required for a particular film sequence could be optimised and stored in the LUTs 20, 30 and selected by frame count as the film is graded.

Enough gain variations could be held, say 256, and used to replace a multiplier as a control of the enhancement level. The different gain characteristics could also be optimised at each gain setting.

As two LUTs are used and operated independently, one LUT can be loaded whilst the other is being read. This enables programming of the LUT during film grading with no disruption to the passage of data.

The use of large LUT memory enables the loading of many characteristics and could replace a multiplier for control of the detail level.

The gain characteristic could be determined by some other means, for example, hard-wired logic or microprocessor, and then loaded into the LUT.

## Claims

1. A method of processing a digital detail signal using a look-up table characterized in that the look-up table is a composite comprising a stored gain characteristic and an operator set coring level.

2. A method according to claim 1, wherein the look-up table is loaded first by the coring level and then by the gain characteristic.

3. A method according to claim 1 or 2, wherein the look-up table is loaded alternately by the positive and negative values.

4. A method according to claim 1, wherein the look-up table is loaded with a range of coring levels for each gain characteristic.

5. A method according to claim 1, wherein the look-up table is loaded with a range of gain characteristics for each coring level.

6. A method according to claim 5, wherein the gain characteristic is optimised at each level.

7. A method according to claim 1, wherein the look-up table holds a number of characteristics.

8. A method according to claim 7, wherein the characteristics are selectable on a frame by frame basis.

9. A method according to claim 7, wherein the characteristics are selectable by film type.

10. A method according to any one of claims 1 to 9, wherein two look-up tables are used, one look-up table being read whilst the other look-up table is being loaded.

11. A method of loading a look-up table for use in the processing of a digital detail signal, the method comprising:
receiving an input signal corresponding to a coring level;
loading coring values in accordance with the coring level; and
loading selected gain characteristics.

12. A method according to claim 11, wherein the look-up table is loaded first by the coring level and then by the gain characteristic.

13. A method according to claim 11 or 12, wherein the look-up table is loaded alternately by the positive and negative values.

14. A method according to claim 11, wherein the look-up table is loaded with a range of coring levels for each gain characteristic.

15. A method according to claim 11, wherein the look-up table is loaded with a range of gain characteristics for each coring level.

16. A method according to claim 15, wherein the gain characteristic is optimised at each level.

17. A method according to claim 11, wherein the look-up table holds a number of characteristics.

18. A method according to claim 17, wherein the characteristics are selectable on a frame by frame basis.

19. A method according to claim 17, wherein the characteristics are selectable by film type.
